# EUROPÄISCHE PATENTANMELDUNG

(11) **EP 1 785 496 A1**
(43) Veröffentlichungstag der Anmeldung: **16.05.2007**
(21) Anmeldenummer: 05024498.7
(22) Anmeldetag: 10.11.2005
(51) Int. Cl.: C21D 9/08, C21D 1/42, B60G 21/05, H05B 6/38, C21D 1/10

(54) **Verfahren zum Härten der Randbereiche von metallischen Vertiefungen mittels Induktionserwärmung, und Anwendung des Verfahrens zur lokalen Härtung einer Verbundlenkerachse**

(71) Anmelder: GH-Induction Deutschland Induktions-Erwärmungs-Anlagen GmbH, 69434 Hirschhorn/Neckar (DE)
(72) Erfinder: Gattenmeier, Helmut, 69434 Hirschhoern/Neckar (DE); Bissdorf, Richard J., 68343 Hirschhorn/Neckar (DE)
(74) Vertreter: Zellentin, Wiger

(57) **Zusammenfassung**

Die vorliegende Erfindung betrifft ein Verfahren zum Härten von doppelwandigen Rändern von metallischen Vertiefungen durch Erwärmen, Abschrecken und ggf. Anlassen, wobei man beidseits des Randes und nahe diesem einen stromdurchflossenen, wassergekühlten Induktionsleiter derart verlegt und mit Wechselstrom beaufschlagt, dass die Stromlaufrichtung außen und innen je gleich ist.
Die Anwendung des Verfahrens zur lokalen Härtung einer Verbundlenkerachse im Randbereich ihrer Vertiefung wird dargestellt. Die so hergestellte Verbundlenkerachse zeichnet sich durch eine verringerte Verletzungsgefahr im Randereich und durch die Abwesenheit von inneren Verschweisspunkten aus.

## Beschreibung

Die vorliegende Erfindung betrifft ein Verfahren zum Härten von Rändern von Vertiefungen aufweisenden, induktiv härtbaren metallischen Gegenständen, sowie nach diesem Verfahren hergestellte Produkte.

Beim Härten werden Stahlteile auf z.B. über 900°C erwärmt und anschließend abgeschreckt, wobei die gewünschten martensitischen Gefügeumwandlungen auftreten. Danach werden die Teile durch moderates Erwärmen angelassen.

In der EP 1 160 108 B1 ist ein Verfahren zum partiellen Härten von Verbundlenkerachsen beschrieben, bei welchem um deren Enden Induktionsleiter z.B. als Wendel gelegt werden, um deren Enden zu härten. Damit soll erreicht werden, dass die Endbereiche zwar gehärtet sind, der mittlere Bereich dagegen "torsionsweich".

Abgesehen davon, dass damit der Rand um die Vertiefung der Verbundlenkerachse nicht härtbar ist, besteht bei einer derartigen Vorgehensweise bei der Härtung von Verbundlenkerachsen die Gefahr, dass an den Innenbereichen, wo die obere, nach unten gestauchte Phase an der unteren anliegt oder dieser nahe ist, eine Verschweißung durch das Erwärmen auftritt, die bei (mehrfacher) Verwindung zu Rissbildung führen kann, da hier die beiden Blechsegmente nicht mehr aneinander gleiten können, was beim Abreißen der Verschweißung zu Kerbwirkung führt. Ferner ist der obere Rand der rinnenförmigen Vertiefung ungehärtet einer durch die Formgebung bedingten erhöhten Verletzungsgefahr ausgesetzt, plastische Verformung an diesem eine Kante darstellenden empfindlichen Bereich führt ebenfalls zu leichterer Kerbbildung als in dem mechanisch stabileren Mantel.

Die vorliegende Erfindung hat sich daher die Aufgabe gestellt, ein Verfahren zu schaffen, nach welchem Vertiefungen aufweisende Gegenstände allein in ihrem Randbereich härtbar sind, insbesondere sollen damit Verbundlenkerachsen ohne die Gefahr einer inneren Verschweißung an den einander nahen Bereichen herstellbar sein, die modifizierte Eigenschaften aufweisen.

Die Lösung dieser Aufgabe gelingt bei einem Verfahren zum Härten von doppelwandigen Rändern von metallischen Vertiefungen durch Erwärmen, Abschrecken und ggf. Anlassen, wobei man beidseits des Randes und nahe diesem einen stromdurchflossenen, wassergekühlten Induktionsleiter derart verlegt und mit Wechselstrom beaufschlagt, dass die Stromlaufrichtung außen und innen je gleich sind.

Die gekühlten Stromleiter sind dabei nahe dem inneren und äußeren Rand vorzugsweise so verlegt, dass die Stromlaufrichtung sich gegenüber der Außenseite an der Innenseite umkehrt, d.h. der Leiter ist hier zurückgeführt. Die Leiter sind dabei mäanderförmig angeordnet und an den gegenüberliegenden Enden der Vertiefungen herausgeführt. Eine solche Anordnung eröffnet die Möglichkeit, z.B. beidseitig Stromleiterpaare anzuordnen, die dann je Seite gleiche Stromlaufrichtungen aufweisen. Dies ist deshalb von besonderer Bedeutung, da sonst eine Aufheizung auf die für die Martensitbildung erforderlichen ca. 950° nicht erreicht wird, wobei die umgebogenen Ränder die an sich auftretenden entgegengerichteten Felder abschirmen.

Die Kupfer-Stromleiter besitzen vorteilhaft einen rechteckigen, z. B. quadratischen Querschnitt, wodurch sie den zu erwärmenden Rändern relativ große Flächen zukehren.

Es kann vorteilhaft sein, insbesondere bei den oben erwähnten Verbundlenkerachsen, die eine gestreckte Form aufweisen, auch die Kehle an den inneren Enden der Vertiefung zu härten. Dazu wird vorgeschlagen, die Stromleiter entsprechend tief aus den Muldenkehlen herauszuführen.

Erfindungsgemäß ist es auch möglich, die Härtung der Randbereiche zu modifizieren, beispielsweise dadurch, dass die Stromleiter längs der Ränder nicht linear, sondern bogenförmig verlaufen, beispielsweise mittig leicht herabgezogen werden. Schreckt man einen derartig erwärmten Gegenstand ab, so entsteht ein entsprechendes gehärtetes Profil.

Anhand der beiliegenden Figuren wird die vorliegende Erfindung näher erläutert. Dabei zeigen
- **Fig. 1**: eine Torsionslenkerachse und
- **Fig. 2**: einen Schnitt durch diese.

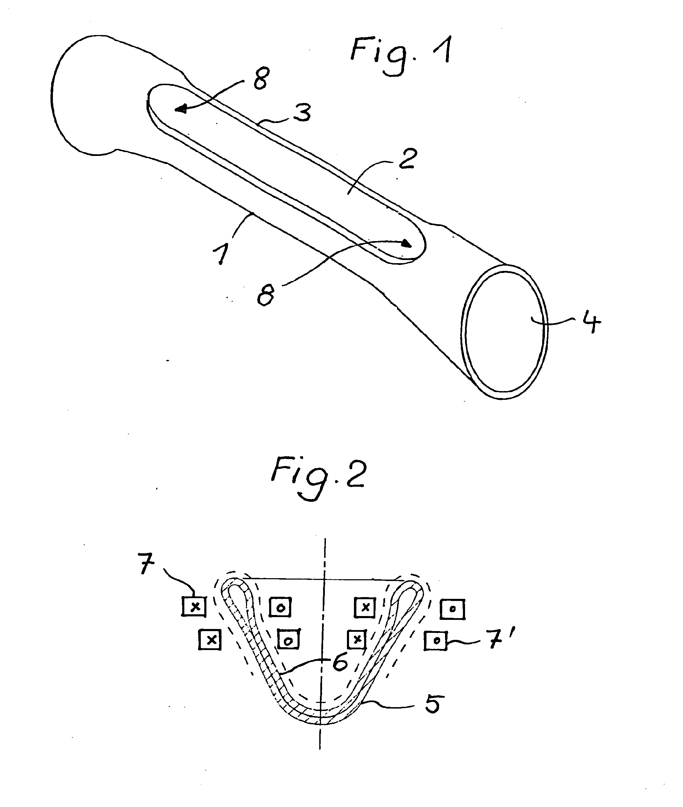

Fig. 1 zeigt als typisches Beispiel für die Anwendung der vorliegenden Erfindung das Mittelstück 1 einer Verbundlenkerachse eines PKW. Es ist aus einem Rohr gefertigt, in das eine längliche Vertiefung 2 eingeformt wurde, wodurch ein umlaufender Rand 3 gebildet wird, der einen relativ kleinen Biegeradius aufweist. An den Enden verbleiben runde Öffnungen 4 in denen die Längslenker (nicht dargestellt) eingefügt werden können. Gleichzeitig weist dieses Gebilde eine mittlere Querschnittsverjüngung auf.

Die erfindungsgemäße Verbundlenkerachse 1 unterscheidet sich dadurch vom Stand der Technik, dass diese um ihren Rand 3 herum innen und außen einen einige Zentimeter breiten Streifen aus härterem, martensitischem Gefüge aufweist, was einerseits die Festigkeit des Randes gegen Schlagverletzung erhöht, andererseits aber die Torsionseigenschaften nicht negativ beeinflusst. Darüber hinaus weist diese Achse keine inneren Verschweißungspunkte auf. Die Lebensdauer wird hierdurch erhöht.

Fig. 2 veranschaulicht den Herstellungsvorgang. Gezeigt ist ein Querschnitt durch den mittleren Bereich der Achse 1 (das dahinter liegende runde Endstück ist weggelassen). Die Achse 1 besteht aus dem äußeren Mantel 5 und dem inneren Mantel 6, gestrichelt ist die mittlere Querschnittsverjüngung angedeutet.

Neben den Mänteln 5, 6 sind die miteinander verbundenen Stromleiter 7, 7' gezeigt. Diese verlaufen innen gegensinnig zu den äußeren, untereinander weisen sie außen bzw. innen die gleiche Stromrichtung auf, wobei sie mäanderförmig derart verlegt sind, dass die Enden des Stromleiters zu ihren Anschlüssen innen an den Kehlen 8 der Vertiefung herausgeführt sind.

Vorteilhaft ist bei einer solchen Anordnung, dass der mäanderförmig verlaufende Stromleiter 7, 7' ortsfest verbleiben kann, der zu härtende Gegenstand wird von unten hineingeführt. Dies erlaubt eine automatisierte Erwärmung (und Härtung bzw. ein automatisiertes Anlassen).

Die Leiter 7 haben Außenabmessungen von z.B. 10 x 10 mm. Die Wandstärke beträgt 1 mm. Die Erwärmung erfolgt beispielsweise mit 35 kW bei 400 V und 600 Amp. mit mF Energie, vorzugsweise 10 kHz.

Der Stahlmantelrand wird innerhalb von 15 Sekunden auf 950 °C aufgeheizt, für 60 Sekunden zum Temperaturausgleich bei dieser Temperatur gehalten, um dann innerhalb von 10 Sekunden abzuschrecken.

## Patentansprüche

1. Verfahren zum Härten von doppelwandigen Rändern von metallischen Vertiefungen durch Erwärmen, Abschrecken und gegebenenfalls Anlassen, wobei man beidseits des Randes und nahe diesem einen stromdurchflossenen, wassergekühlten Induktionsleiter derart verlegt und mit Wechselstrom beaufschlagt, dass die Stromlaufrichtung außen und innen je gleich ist.

2. Verfahren nach Anspruch 2, **dadurch gekennzeichnet, dass** man den Stromleiter paarweise mäanderförmig derart verlegt, dass beidseits des Randes je gleichlaufende Paare entstehen, wobei innen und außen entgegengesetztlaufende Paare vorliegen.

3. Verfahren nach Anspruch 1 oder 2, **dadurch gekennzeichnet, dass** der Stromleiter einen quadratischen, innen von Wasser gekühlten Querschnitt aufweist.

4. Verfahren nach einem oder mehreren der Ansprüche 1 bis 3, **dadurch gekennzeichnet, dass** bei gestreckten Vertiefungen die Stromleiterenden innen nahe den Kehlen herausgeführt werden.

5. Verfahren nach einem der Ansprüche 1 bis 4, **dadurch gekennzeichnet, dass** die Vertiefung Teil einer Verbundlenkerachse ist.

6. Verbundlenkerachse für einen PKW, **dadurch gekennzeichnet, dass** diese längs des Randes ihrer Vertiefung gehärtet ist.

7. Verbundlenkerachse nach Anspruch 6, **dadurch gekennzeichnet, dass** der gehärtete Rand einen durch Formgebung des Stromleiters oder durch einen zusätzlichen Stromleiter vorgegebenen Randbereich mit profilierter Härtung aufweist.

8. Verfahren nach Anspruch 6 oder 7, **dadurch gekennzeichnet, dass** zusätzlich zum Rand (3) auch die Kehlen (8) gehärtet sind.

## Geänderte Patentansprüche

### Geänderte Patentansprüche gemäss Regel 86(2) EPÜ.

**1.** Verbundlenkerachse für einen PKW, **dadurch gekennzeichnet, dass** diese allein längs des Randes ihrer Vertiefung gehärtet ist.

**2.** Verbundlenkerachse nach Anspruch 6, **dadurch gekennzeichnet, dass** der gehärtete Rand einen durch Formgebung des Stromleiters oder durch einen zusätzlichen Stromleiter vorgegebenen Randbereich mit profilierter Härtung aufweist.

**3.** Verfahren nach Anspruch 6 oder 7, **dadurch gekennzeichnet, dass** zusätzlich zum Rand (3) auch die Kehlen (8) gehärtet sind.
